# EUROPÄISCHE PATENTSCHRIFT

(11) **EP 0 733 656 B1**
(45) Veröffentlichungstag und Bekanntmachung des Hinweises auf die Patenterteilung: **26.04.2000**
(21) Anmeldenummer: 96100320.9
(22) Anmeldetag: 11.01.1996
(51) Int. Cl.: C08G 18/62, C09D 175/04

(54) **Bindemittelgemisch und seine Verwendung**
Binder mixture and its use
Mélange de liants et son utilisation

(30) Priorität: 24.01.1995 DE 19502086
(43) Veröffentlichungstag der Anmeldung: 25.09.1996
(73) Patentinhaber: BAYER AG, 51368 Leverkusen (DE)
(72) Erfinder: Hovestadt, Wieland, Dr., D-47800 Krefeld (DE); Ruttmann, Gerhard, D-51399 Burscheid (DE); Rettig, Rainer, Dr., D-51515 Kürten (DE)

(56) Entgegenhaltungen:
- EP-A- 0 029 598
- EP-A- 0 339 472
- EP-A- 0 528 304
- EP-A- 0 580 054

## Beschreibung

Die Erfindung betrifft ein neues, zur Herstellung von lösemittelfreien Beschichtungen geeignetes Bindemittelgemisch aus einer Polyisocyanatkomponente und einer speziellen, hydroxyfunktionellen Polyacrylatkomponente, sowie die Verwendung des Bindemittelgemisches in lösemittelfreien Beschichtungs- und Vergußmassen.

Zweikomponenten-Polyurethan-Beschichtungsmittel, auf Basis von Lackpolyisocyanaten und hydroxyfunktionellen Polyacrylaten sind seit langem bekannt (vgl. z.B. Glasurit-Handbuch, Lacke und Farben, 11. Auflage, Seite 66 ff., Curt R. Vincentz Verlag, Hannover 1984). Sie zeichnen sich durch ihre hervorragende Licht-, Witterungs- und Chemikalienbeständigkeit aus und übertreffen hierbei Zweikomponenten-Polyurethanlacke auf Polyether- oder Polyesterbasis.

Aus ökologischen Gründen sollte die Lösungsmittelemission bei der Applikation von Beschichtungsmitteln möglichst gering gehalten werden. Aus diesem Grund wurden in letzter Zeit viele festkörperreiche Systeme entwickelt, die im Idealfall jedoch lösungsmittelfrei sein sollten.

Lichtbeständige, harte, lösemittelfreie Zweikomponenten-Polyurethan-Beschichtungsmittel und Vergußmassen auf Basis von aliphatischen Polyisocyanaten und Polyether- und Polyesterpolyolen werden vor allem im Bereich der Fußboden-, Balkon- und Dachbeschichtungen eingesetzt. Diese Beschichtungen zeigen Mängel in der Witterungs- und Chemikalienbeständigkeit. Nachteilig ist auch die relativ hohe Hydrophilie und damit die relativ hohe Wasseraufnahme der Polyole während deren Lagerung, Verarbeitung und Aushärtung. Das insbesondere aus der Atmosphäre absorbierte Wasser reagiert mit Polyisocyanaten unter CO₂-Bildung zu Polyharnstoffen, so daß ohne aufwendige Maßnahmen (z.B. Trocknung der Polyole vor deren Verarbeitung durch eine Vakuumbehandlung oder Zugabe von wasserabsorbierenden Substanzen zu den Bindemittelgemischen) keine blasenfreien Filmoberflächen entstehen.

In der EP-A-0 580 054 werden niedrigviskose, lösungsmittelfreie, estermodifizierte Polyacrylatharze beschrieben, die laut allgemeiner Beschreibung einen OH-Gehalt von 2 bis 10 Gew.-% und bei 23°C eine Viskosität von 250 bis 80 000 mPa.s aufweisen. Die Verbindungen werden durch Polymerisation der Monomeren in einem Gemisch aus Lactonen und mehrwertigen Alkoholen hergestellt. Die konkret beschriebenen Polyhydroxylverbindungen weisen einen unter 6 Gew.-% liegenden OH-Gehalt auf. Die diese Polyacrylatpolyole und aliphatische Polyisocyanate enthaltenden Bindemittelkombinationen gestatten zwar die Herstellung von Beschichtungen, die im Vergleich zu entsprechenden Beschichtungen auf Basis von Polyester- oder Polyetherpolyolen eine verbesserte Verseifungs-, Witterungs- und Chemikalienbeständigkeit aufweisen, die Härte der erhaltenen Beschichtungen genügt jedoch oftmals nicht den diesbezüglichen Forderungen der Bauindustrie.

Es war daher die der Erfindung zugrundeliegende Aufgabe, neue Bindemittelgemische zur Verfügung zu stellen, die die Herstellung von lösungsmittelfreien, zu harten Beschichtungen ausreagierenden Beschichtungsmitteln gestatten, die nicht mit den aufgezeigten Nachteilen des Standes der Technik behaftet sind.

Diese Aufgabe konnte mit der Bereitstellung der nachstehend näher beschriebenen erfindungsgemäßen Bindemittelgemische gelöst werden. Die erfindungsgemäß aufgefundenen Lösungen der genannten Aufgabe muß als überraschend angesehen werden, weil nicht erwartet werden konnte, daß die eingesetzten Polyacrylatpolyole trotz ihres hohen Gehalts an OH-Gruppen die zur blasenarmen Aushärtung der oftmals dickschichtigen Beschichtungs- und Vergußmassen erforderliche Hydrophobie aufweisen würden. Es mußte vielmehr aufgrund eine Reaktion zwischen Isocyanatgruppen und Feuchtigkeit mit einer Kohlendioxidentwicklung und damit verbundenen verstärkten Blasenbildung gerechnet werden.

Gegenstand der Erfindung ist ein Bindemittelgemisch zur Herstellung von lösemittelfreien, harten Beschichtungen, bestehend aus
a) einer Polyisocyanat-Komponente mit einem NCO-Gehalt von 10 bis 35 Gew.-%, bestehend aus mindestens einem organischen Polyisocyanat;
b) einer hydroxyfunktionellen, lösungsmittelfreien Polyacrylatkomponente;
c) 0 bis 50 Gew.-%, bezogen auf das Gesamtgewicht von b) und c) weitere von b) verschiedene OH-Gruppen aufweisende Bindemittelkomponenten;
in einem NCO/OH-Äquivalentverhältnis von 0,5:1 bis 2,0:1 entsprechenden Mengen, sowie gegebenenfalls
d) üblichen Hilfs- und Zuatzstoffen der Beschichtungstechnologie,
dadurch gekennzeichnet, daß die Polyacrylatkomponente b) einen Hydroxylgruppengehalt von 10,1 bis 20 Gew.-% und eine Viskosität bei 23°C von 200 bis 20 000 mPa.s besitzt.

Gegenstand der Erfindung ist auch die Verwendung dieses Bindemittelgemischs in lösemittelfreien Zweikomponenten-Polyurethan-Beschichtungs- und Vergußmassen.

Die erfindungsgemäße Polyisocyanatkomponente a) weist eine über 2, vorzugsweise bei 2,5 bis 6 und insbesondere bei 2,8 bis 4, liegende mittlere NCO-Funktionalität, einen NCO-Gehalt von 10 bis 35, vorzugsweise 15 bis 25, Gew.-% und einen Gehalt an destillierbaren Diisocyanaten von unter 0,7, vorzugsweise unter 0,5, Gew.-% auf. Die Komponente a) besteht aus mindestens einem Biuret-, Urethan-, Allophanat-, Isocyanurat- und/oder Uretdiongruppen aufweisendenLackpolyisocyanat mit vorzugsweise aliphatisch und/oder cycloaliphatisch gebundenen Isocyanatgruppen. Die Herstellung derartiger Lackpolyisocyanate erfolgt durch an sich bekannte Modifizierung von einfachen organischen Diisocyanaten, wie sie beispielsweise in DE-OS 1 595 273, DE-OS 3 700 209 und DE-OS 3 900 053 oder in EP-A-0 330 966, EP-A-0 259 233, EP-A-0 377 177, EP-A-0 496 208, EP-A-0 524 501 bzw. US-PS 4 358 171 beschrieben ist.

Geeignete Diisocyanate zur Herstellung von Lackpolyisocyanaten sind beispielsweise 1,4-Diisocyanatobutan, 1,6-Diisocyanatohexan (HDI), 1,5-Diisocyanato-2,2-dimethylpentan, 2,2,4- bzw. 2,4,4-Trimethyl-1,6-diisocyanatohexan, 1-Isocyanato-3,3,5-trimethyl-5-isocyanatomethylcyclohexan (IPDI), 1-Isocyanato-1-methyl-4-(3)-isocyanatomethyl-cyclohexan, 1,3-Diisocyanato-6-methyl-cyclohexan, Bis-(4-isocyanatocyclohexyl)methan, 1,10-Diisocyanatodecan, 1,12-Diisocyantododecan, Cyclohexan-1,3- und -1,4-diisocyanat, oder Gemische daraus. Bevorzugte Lackpolyisocyanate sind solche auf Basis von HDI oder IPDI oder Gemischen aus HDI und IPDI.

Die Polyolkomponente b) weist bei 23°C einen Hydroxylgruppengehalt von 10,1 bis 20, vorzugsweise 11 bis 17,5 und besonders bevorzugt von 11 bis 15, Gew.-% und eine Viskosität bei 23°C von 200 bis 20 000, vorzugsweise von 1 000 bis 10 000 mPa.s auf. Besonders bevorzugt handelt es sich bei der Komponente b) um Polyacrylatpolyole, welche hergestellt werden durch eine radikalische Polymerisation von
b1) 100 Gew.-Teilen eines Gemischs olefinisch ungesättigter Monomerer, welches zumindest zu 5 Gew.-% aus alkoholische Hydroxylgruppen auf- weisenden Monomeren besteht,
   in Gegenwart von
b2) 20 bis 200 Gew.-Teilen einer Alkoholkomponente, bestehend aus mindestens einem mehrwertigen Alkohol des Molekulargewichtsbereichs 62 bis 1 000,
   gegebenenfalls unter Mitverwendung von
b3) 0 bis 100 Gew.-Teilen an cyclischen Verbindungen, die in Gegenwart von alkoholischen Hydroxylgruppen aufweisenden Verbindungen als Starter im Sinne einer ringöffnenden Polymerisationsreaktion reagieren können.

Bei den Monomeren b1) handelt es sich um Gemische aus insbesondere einfach olefinisch ungesättigen Verbindungen des Molekulargewichtsbereichs 53 bis 400, vorzugsweise 80 bis 220. Hierzu gehören beispielsweise Acrylsäure- oder Methacrylsäure-alkylester oder -cycloalkylester mit 1 bis 18, vorzugsweise 1 bis 8 Kohlenstoffatomen im Alkyl- bzw. Cycloalkylrest wie beispielsweise Methyl-, Ethyl-, n-Propyl-, n-Butyl-, Isopropyl-, Isobutyl-, t-Butyl-, die isomeren Pentyl-, Hexyl-, Octyl-, Dodecyl-, Hexadecyl- oder Octadecylester der genannten Säuren, Acetoacetoxyethylmethacrylat, Acrylnitril, Vinylether, Methacrylnitril, Vinylacetat, Styrol oder Vinyltoluol und Hydroxyalkylester α,β-ungesättigter Carbonsäuren, insbesondere von Acrylsäure oder Methacrylsäure mit 2 bis 12, vorzugsweise 2 bis 6 Kohlenstoffatomen im Hydroxyalkylrest, wie 2-Hydroxyethylacrylat, die isomeren, durch Anlagerung von 1 Mol Propylenoxid an 1 Mol Acrylsäure erhaltenen Hydroxypropylacrylate, 2-, 3- und 4-Hydroxybutylacrylat, die isomeren Hydroxyhexylacrylate und die diesen Acrylaten entsprechenden Methacrylate. Ebenfalls geeignet sind mit Ethylen-, Propylen- und/oder Butylenoxid modifizierte bzw. kettenverlängerte hydroxyfunktionelle Monomere eines maximalen Molekulargewichts von 376. Außerdem geeignet sind carboxylgruppenhaltige, ungesättigte Monomere wie beispielsweise Acrylsäure, Methacrylsäure, Itaconsäure, Crotonsäure und Halbester der Malein- und Fumarsäure sowie deren Mischungen oder beliebige Gemische derartiger und anderer Monomerer.

Bezogen auf die Gesamtmenge des Gemisches olefinisch ungesättigter Monomerer b1) kommen die alkoholischen Hydroxylgruppen tragenden Monomeren in einer Menge von zumindest 5 Gew.-%, bevorzugt zumindest 15 Gew.-%, besonders bevorzugt zumindest 30 Gew.-%, zum Einsatz.

Die Alkoholkomponente b2) besteht aus mindestens einem mehrwertigen Alkohol des Molekulargewichtsbereichs 62 bis 1 000, vorzugsweise 62 bis 286. Beispielhaft genannt seien Ethylenglykol, Diethylenglykol. Triethylenglykol, 1,2-Propandiol, Tripropylenglykol, 1,3-Propandiol, 2-Methylpropandiol, 1,2-Butandiol, 1,3-Butandiol, 1,4-Butandiol, 1,5-Pentandiol, 2,2-Dimethyl-1,3-propandiol, 1,6-Hexandiol, 2,5-Hexandiol, 2-Ethyl-2-methyl-1,3-propandiol, 3,3-Dimethyl-1,2-butandiol, 2-Methyl-2,4-pentandiol, 2,2-Diethyl-1,3-propandiol. Octandiol, 2-Ethyl-1,3-hexandiol, Decandiol, Dodecandiol, Hexandecandiol, Octadecandiol, Cyclohexandiol, Glycerin, 1,1,1-Tris-(hydroxymethyl)-propan, 1,2,6-Hexantriol oder Mischungen hieraus. Bevorzugt sind Diole oder Mischungen von Diolen, welche bei Raumtemperatur flüssig sind und einen Siedepunkt oberhalb der Polymerisationstemperatur besitzen, wie 1,3-Butandiol oder 2-Ethyl-1,3-hexandiol, ganz besonders bevorzugt 2-Ethyl-1,3-hexandiol oder Mischungen mit diesem Diol. Ebenfalls als Komponente b2) geeignet sind Ethergruppen aufweisende, mehrwertige Alkohole des genannten Molekulargewichtsbereichs, die durch Alkoxylierung von ethergruppenfreien, mehrwertigen Alkoholen der beispielhaft genannten Art unter Verwendung von Ethylenoxid und/oder Propylenoxid in an sich bekannter Weise zugänglich sind.

Bei den gegebenenfalls bei der Herstellung der hydroxyfunktionellen Komponente b) mitzuverwendenden cyclischen Verbindung b3) handelt es sich um beliebige Verbindungen des Molekulargewichtsbereichs 72 bis 439, die in Gegenwart von alkoholischen Hydroxylgruppen als Starter im Sinne einer ringöffnenden Polymerisationsreaktion reagieren können. Beispiele solcher Verbindungen sind Lactone, wie β-Propiolacton, β-Butyrolacton, γ-Butyrolacton, γ-Valerolacton, Pivalolacton, ε-Caprolacton und substituierte Lactone, wie Methyl-, Ethyl-, Propyl-, Dodecyl-ε-caprolacton, Dialkyllactone, Trialkyllactone, Cyclohexyl-ε-caprolacton, Phenyl-ε-caprolacton, Methoxy-ε-caprolacton, Ethoxy-ε-caprolacton, außerdem cyclische Carbonate, wie Ethylencarbonat, Propylencarbonat, Neopentylglykol carbonat und Epoxide, wie 2-Ethylhexylglycidylether, Phenylglycidylether, Glycidylester der Versaticsäure oder beliebige Gemische derartiger cyclischer Verbindungen. Bevorzugt eingesetzt werden können Lactone, besonders bevorzugt ε-Caprolacton.

Bei der Herstellung der Polyacrylatkomponente b) des erfindungsgemäßen Bindemittelgemisches kommen die Komponenten b1), b2) und gegebenenfalls b3) in einem solchen Mengenverhältnis innerhalb der bereits obengenannten Bereiche zum Einsatz, daß der OH-Gehalt der resultierenden Polyacrylatpolyole den bereits oben gemachten Ausführungen entspricht. Vorzugsweise werden pro 100 Gewichtsteile der Komponente b1) 40 bis 140 Gewichtsteile der Komponente b2) und 0 bis 60, insbesondere 10 bis 60 Gewichtsteile der Komponente b3) eingesetzt.

Die Herstellung der Polyacrylatkomponente b) des erfindungsgemäßen Bindemittelgemisches erfolgt durch eine an sich bekannte, beispielsweise in der EP-A 0 580 054 beschriebene, radikalische Polymerisation im Zulaufverfahren. Im allgemeinen werden mindestens 50 Gew.-% der Komponente b2) und/oder gegebenenfalls mindestens 50 Gew.-% der Komponente b3) im Polymerisationsgefäß vorgelegt und auf Reaktionstemperatur, die bei +80 bis +220°C, vorzugsweise bei +120 bis +190°C liegt, aufgeheizt. Anschließend werden die Monomermischung b1), gegebenenfalls weitere Anteile der Komponenten b2) und b3) und ein Polymerisationsinitiator zudosiert. Nach beendeter Zugabe wird die Reaktionstemperatur bis zur Beendigung der Umsetzung unter Rühren aufrecht erhalten.

Als Polymerisationsinitiatoren seien beispielhaft Dibenzoylperoxid, Di-tert.-butylperoxid, Dilaurylperoxid, Dicumylperoxid, Didecanoylperoxid, tert.-Butylperoxy-2-ethylhexanoat oder Butylperoxybenzoat sowie Azoverbindungen, z.B. 2,2'-Azobis-(2,4-dimethylvaleronitril), 2,2'-Azobis-(isobutyronitril), 2,2'-Azobis-(2,3-dimethylbutyronitril), 1,1'-Azobis-(1-cyclohexannitril) genannt.

Bei der Herstellung der Polyacrylatkomponente b) des erfindungsgemäßen Bindemittelgemisches können gegebenenfalls molekulargewichtsregelnde Substanzen wie n-Dodecylmercaptan, tert.-Dodecylmercaptan oder dergleichen in Mengen von bis zu 10 Gew.-%, bezogen auf Gesamtgewicht des Reaktionsgemisches mitverwendet werden.

Oftmals ist auch die Mitverwendung von Katalysatoren für die ringöffnende Polymerisationsreaktion der Komponenten b3) angezeigt, die in Mengen von bis zu 0,8 Gew.-%, bezogen auf das Gesamtgewicht des Reaktionsansatzes, mitverwendet werden können. Für diesen Zweck geeignet sind beispielsweise Lewis-Säuren oder organische Metallverbindungen wie beispielsweise Bortrifluoridetherat, Tetrabutyltitanat, Zinkchlorid, Zinkacetat, Zinndioctoat, Dibutylzinnoxid und Mischungen hieraus.

Die Art und die Gewichtsverhältnisse der Komponenten b1), b2) und gegebenenfalls b3), die Menge des Polymerisationsinitiators und die Polyermisationstemperatur werden im Rahmen der bereits oben gemachten Ausführungen so gewählt, daß die Viskosität der Polyacrylatkomponente b) den oben gemachten Angaben enspricht. Hier, vor- und nachstehend beziehen sich alle Viskositätsangaben im Zusammenhang mit der Komponente b) um die bei 23°C gemäß DIN 53019 in einem Contraves Rotationsviskosimeter ermittelte Viskosität.

In den erfindungsgemäßen Bindemittelgemischen können neben der erfindungswesentlichen Polyacrylatkomponente b) auch noch weitere, Hydroxylgruppen aufweisende Bindemittelkomponenten c), beispielsweise die aus der Lacktechnologie bekannten Polyester-, Polycarbonat-, oder Poyletherharze vorliegen. Auch Polyacrylatpolyole, die nicht der Definition der erfindungswesentlichen Komponente b) entsprechen, können als zusätzliche Polyhydroxylkomponente c) oder als Teil einer derartigen zusätzlichen Komponente c) mitvenvendet werden. Wie aus der Angabe "bestehend im wesentlichen aus" ersichtlich, enthält das erfindungsgemäße Bindemittelgemisch, falls überhaupt, allenfalls bis zu 50 Gew.-%, bezogen auf das Gesamtgewicht der Komponenten b) und c), an Polyhydroxylverbindungen c). Vorzugsweise liegen in den erfindungsgemäßen Bindemittelgemischen keine weiteren derartigen Polyhydroxylverbindungen c) vor.

Zur Herstellung der erfindungsgemäßen Beschichtungsmittel werden die Komponenten a) und b) und gegebenenfalls c) miteinander in solchen Mengenverhältnissen vermischt, die einem NCO/OH-Äquivalentverhältnis von 0,5:1 bis 2,0:1, vorzugsweise 0,8:1 bis 1,5:1, entsprechen. Vor, während oder gleichzeitig mit dieser Durchmischung der Einzelkomponenten a), b) und gegebenenfalls c) können gegebenenfalls die üblichen Hilfs- und Zusatzstoffe der Beschichtungstechnologie zugemischt werden. Hierzu gehören beispielsweise Verlaufsmittel, z.B. auf Celluloseester- oder Oligoalkylacrylatbasis, Pigmente und Füllstoffe, viskositätskontrollierende Zusätze wie Bentonite und Kieselsäureester, Mattierungsmittel wie beispielsweise Kieselsäure, Aluminiumsilikate und hochmolekulare Wachse oder Katalysatoren für die Vernetzungsreaktion, wie beispielsweise Dibutylzinnoxid oder Dimethylbenzylamin.

Die aus den erfindungsgemäßen Bindemittelgemischen und gegebenenfalls Hilfs- und Zusatzstoffen der beispielhaft genannten Art bestehenden, erfindungsgemäß zu verwendenden Beschichtungs- und Vergußmassen eignen sich insbesondere als lösungsmittelfreie, wetterstabile, vergilbungsresistente, harte Beschichtungen im Baubereich, insbesondere für die Balkon-, Dach- und Fußbodenbeschichtung.

Die folgenden Beispiele sollen die Erfindung näher erläutern, ohne sie jedoch einzuschränken. Alle Angaben in "%" beziehen sich auf das Gewicht.

### Beispiele

### Verwendete Lackpolyisocyanate:

- A:: Isocyanuratgruppen aufweisendes Lackpolyisocyanat auf Basis von 1,6-Diisocyanatohexan mit einem NCO-Gehalt von 21,8 % und einer Viskosität von 3 250 mPa.s (23°C) (®Desmodur N 3300 der Bayer AG, Leverkusen).
- B:: Biuretgruppen aufweisendes Lackpolyisocyanat auf Basis von 1,6-Diisocyanatohexan mit einem NCO-Gehalt von 23,0 % und einer Viskosität von 2 750 mPa.s (23°C) (®Desmodur N 3200 der Bayer AG, Leverkusen).

### Beispiele 1-7

Allgemeine Arbeitsvorschrift zur Herstellung der nachstehend tabellarisch zusammengefaßten Polyacrylatpolyole (Beispiele 1-7):

Die Komponenten aus Teil I werden in einem Reaktionsgefaß unter Rühren auf Polymerisationstemperatur erhitzt. Innerhalb von 3 Stunden wird Teil II und parallel dazu innerhalb von 3,5 Stunden Teil III kontinuierlich zudosiert. Nach weiteren 3 Stunden bei gleicher Temperatur wird das Produkt auf Raumtemperatur abgekühlt. Die Zusammensetzung der Teile I bis III und die Polymerisationstemperatur sowie der OH-Gehalt und die Viskosität der Produkte sind in nachstehender Tabelle angegeben.

| **Beispiel** | | | **1** | **2** | **3** | **4** | **5** | **6** | **7**¹⁾ |
|---|---|---|---|---|---|---|---|---|---|
| Teil I | 2-Ethyl-1,3-hexandiol | (g) | 935 | 595 | 456 | 456 | 433 | | |
| | Neopentylglykol | (g) | | | 170 | 153 | | | |
| | 1,3-Butandiol | (g) | | | | | 170 | 442 | 100 |
| | ε-Caprolacton | (g) | | | 209 | 209 | 252 | 289 | 403 |
| Teil II | Methylmethacrylat | (g) | | | | | | 68 | |
| | n-Butylmethacrylat | (g) | | | | | | | 150 |
| | 2-Ethylhexylacrylat | (g) | | 323 | | | | | 72 |
| | n-Butylacrylat | (g) | 225 | | 250 | 182 | 267 | 238 | |
| | Styrol | (g) | 225 | 340 | 216 | 216 | 207 | 238 | |
| | 2-Hydroxyethylmethacrylat | (g) | 258 | 374 | 321 | 406 | 296 | 340 | |
| | Hydroxypropylmethacrylat²⁾ | (g) | | | | | | | 205 |
| Teil III | Di-tert.-butylperoxid | (g) | 57 | 68 | 78 | 78 | 75 | 85 | 60 |
| | Polymerisationstemperatur | (°C) | 165 | 180 | 165 | 165 | 165 | 165 | 160 |
| | OH-Gehalt | (%) | 14,8 | 11,0 | 11,7 | 11,8 | 11,2 | 12,0 | 5,8 |
| | Viskosität (23°C) | (mPas) | 3200 | 8700 | 3950 | 4700 | 1980 | 4480 | 3100 |

| | | | | | | | | | |
|---|---|---|---|---|---|---|---|---|---|
| ¹⁾ nicht erfindungsgemäßes Vergleichsbeispiel nach EP-A 0 580 054, Beispiel 9 | | | | | | | | | |
| ²⁾ Anlagerungsprodukt von 1 Mol Propylenoxid an 1 Mol Methacrylsäure | | | | | | | | | |

### Beispiele 8-13

Allgemeine Arbeistvorschrift zur Herstellung der Bindemittelgemische und deren Verwendung. Die Zusammensetzungen und die Shore-D-Endhärte sind in der nachfolgenden Tabelle angegeben.

Das Lackpolyisocyanat und das Polyacrylatpolyol werden mit 0,1 Gew.-% Dibutylzinnoxid versetzt und homogen vermischt. Das Bindemittelgemisch wird in einer Schichtdicke von 5 mm auf ein Prüfblech appliziert.

Die Shore-D-Endhärte wird nach 3 Tagen bei 50°C oder nach 14 Tagen bei Raumtemperatur bestimmt. Die Beschichtungen zeigen eine sehr gute Licht-, Wetter- und Verseifungsbeständigkeit.

| **Beispiel** | **8** | **9** | **10** | **11** | **12** | **13** |
|---|---|---|---|---|---|---|
| Lackpolyisocyanat a) | B | A | A | A | B | B |
| Menge | 153 g | 124 g | 132 g | 133 g | 116 g | 124 g |
| Polyacrylatpolyol b) | 1 | 2 | 3 | 4 | 5 | 6 |
| Menge | 100 g | 100 g | 100 g | 100 g | 100 g | 100 g |
| NCO/OH-Äquivalentverhältnis | 1:1 | 1:1 | 1:1 | 1:1 | 1:1 | 1:1 |
| Shore-D-Endhärte | 65 | 61 | 68 | 74 | 55 | 77 |

### Beispiel 14 (nicht erfindungsgemäß)

65 g des Lackpolyisocyanates A und 100 g des Polyacrylatpolyols aus Beispiel 7 (NCO/OH-Äquivalentverhältnis: 1:1) werden mit 0,16 g Dibutylzinnoxid versetzt und die Komponenten homogen vermischt. Das Bindemittelgemisch wird in einer Schichtdicke von 5 mm auf ein Prüfblech appliziert.

Nach 14 Tagen bei Raumtemperatur zeigt die Beschichtung lediglich eine ausreichende Verseifungsbeständigkeit und eine Shore-D-Endhärte von 22.

## Patentansprüche

1. Bindemittelgemisch zur Herstellung von lösemittelfreien, harten Beschichtungen, bestehend aus
a) einer Polyisocyanat-Komponente mit einem NCO-Gehalt von 10 bis 35 Gew.-%, bestehend aus mindestens einem organischen Polyisocyanat;
b) einer hydroxyfunktionellen, lösungsmittelfreien Polyacrylatkomponente;
c) 0 bis 50 Gew.-%, bezogen auf das Gesamtgewicht von b) und c) weitere von b) verschiedene OH-Gruppen aufweisende Bindemittelkomponenten;
in einem NCO/OH-Äquivalentverhältnis von 0,5:1 bis 2,0:1 entsprechenden Mengen, sowie gegebenenfalls
d) üblichen Hilfs- und Zusatzstoffen der Beschichtungstechnologie,
dadurch gekennzeichnet, daß die Polyacrylatkomponente b) einen Hydroxylgruppengehalt von 10,1 bis 20 Gew.-% und eine Viskosität bei 23°C von 200 bis 20 000 mPa.s besitzt.

2. Bindemittelgemisch gemäß Anspruch 1, dadurch gekennzeichnet, daß die lösemittelfreie Polyisocyanatkomponente a) eine mittlere NCO-Funktionalität von 2,5 bis 6 aufweist und aus mindestens einem Biuret-, Urethan-, Allophanat-, Isocyanurat- und/oder Uretdiongruppen, sowie (cyclo)-aliphatisch gebundene Isocyanatgruppen aufweisendem Polyisocyanat oder aus einem Gemisch mehrerer derartiger Polyisocyanate besteht.

3. Bindemittelgemisch gemäß Anspruch 1 und 2, dadurch gekennzeichnet, daß die lösemittelfreie Polyacrylatkomponente b) einen Hydroxylgruppengehalt von mehr als 11,0 bis 17,5 Gew.-% und eine Viskosität bei 23°C von 1 000 bis 10 000 mPas besitzt.

4. Bindemittelgemisch gemäß Anspruch 1 bis 3, dadurch gekennzeichnet, daß die Komponente b) aus mindestens einem Polyacrylatharz besteht, welches hergestellt wurde durch eine radikalische Polymerisation von
b1) 100 Gew.-Teilen eines Gemischs olefinisch ungesättigter Monomerer, welches zumindest zu 5 Gew.-% aus alkoholische Hydroxylgruppen aufweisenden Monomeren besteht,
in Gegenwart von
b2) 20 bis 200 Gew.-Teilen einer Alkoholkomponente, bestehend aus mindestens einem mehrwertigen Alkohol des Molekulargewichtsbereichs 62 bis 1 000,
gegebenenfalls unter Mitverwendung von
b3) 0 bis 100 Gew.-Teilen an cyclischen Verbindungen, die in Gegenwart von alkoholischen Hydroxylgruppen aufweisenden Verbindungen als Starter im Sinne einer ringöffnenden Polymerisationsreaktion reagieren können.

5. Bindemittelgemisch gemäß Anspruch 4, dadurch gekennzeichnet, daß die Alkoholkomponente b2) ein Diol oder eine Diolmischung darstellt, die bei Raumtemperatur flüssig ist und einen Siedepunkt oberhalb der Polymerisationstemperatur aufweist.

6. Bindemittelgemisch gemäß Anspruch 4 und 5, dadurch gekennzeichnet, daß die Alkoholkomponente b2) zu mindestens 65 Gew.-% aus 2-Ethyl-1,3-hexandiol besteht.

7. Verwendung der Bindemittelgemische gemäß Anspruch 1 bis 6, in lösemittelfreien Zweikomponenten-Polyurethan-Beschichtungs- und Vergußmassen.

## Claims

1. A binder mixture for preparing solvent-free, hard coatings, consisting of
a) a polyisocyanate component with a NCO content of 10 to 35 wt.%, consisting of at least one organic polyisocyanate;
b) a hydroxy-functional, solvent-free polyacrylate component;
c) 0 to 50 wt.%, with respect to the total weight of b) and c), of further OH group-containing binder components which differ from b);
in amounts corresponding to a ratio by equivalents of NCO/OH of 0.5:1 to 2.0:1, and optionally
d) conventional auxiliary substances and additives from coating technology
characterised in that the polyacrylate component b) has a hydroxyl group content of 10.1 to 20 wt.% and a viscosity at 23°C of 200 to 20 000 mPa.s.

2. A binder mixture according to Claim 1, characterised in that the solvent-free polyisocyanate component a) has an average NCO functionality of 2.5 to 6 and comprises at least one polyisocyanate with biuret, urethane, allophanate, isocyanurate and/or uretdione groups and (cyclo)aliphatically bonded isocyanate groups or a mixture of several polyisocyanates of this type.

3. A binder mixture according to Claims 1 and 2, characterised in that solvent-free polyacrylate component b) has a hydroxyl group content of more than 11.0 to 17.5 wt.% and a viscosity at 23°C of 1 000 to 10 000 mPas.

4. A binder mixture according to Claims 1 to 3, characterised in that component b) consists of at least one polyacrylate resin which was prepared by radical polymerisation of
b1) 100 parts by weight of a mixture of olefinically unsaturated monomers, at least 5 % of which are monomers with alcoholic hydroxyl groups,
in the presence of
b2) 20 to 200 parts by weight of an alcohol component consisting of at least one polyhydric alcohol with a molecular weight in the range 62 to 1 000,
optionally also incorporating
b3) 0 to 100 parts by weight of cyclic compounds which can react as a starter in the context of a ring-opening polymerisation reaction in the presence of compounds with alcoholic hydroxyl groups.

5. A binder mixture according to Claim 4, characterised in that alcohol component b2) is a diol or a mixture of diols which is liquid at room temperature and has a boiling point above the polymerisation temperature.

6. A binder mixture according to Claims 4 and 5, characterised in that at least 65 wt.% of alcohol component b2) consists of 2-ethyl-1,3-hexanediol.

7. Use of the binder mixture according to Claims 1 to 6 in solvent-free, two-component polyurethane coating and sealing compositions.

## Revendications

1. Liant mélangé prévu pour l'application de revêtements durs et résistants aux solvants, qui consiste en
a) un composant polyisocyanate à une teneur en NCO de 10 à 35 % en poids, consistant en au moins un polyisocyanate organique ;
b) un composant polyacrylate à fonctions hydroxy, exempt de solvants ;
c) 0 à 50 % en poids, par rapport au poids total de b) et c), de composants de liants à groupes OH, autres que b) ;
en quantités correspondant à un rapport de 0,5:1 à 2,0:1 entre les équivalents de NCO et les équivalents d'OH,
et le cas échéant
d) des produits auxiliaires et additifs usuels de l'industrie des revêtements,
et qui se caractérise en ce que le composant polyacrylate b) a une teneur en groupes hydroxy de 10,1 à 20 % en poids et une viscosité à de 200 à 20 000 mPa.s à 23°C.

2. Liant mélangé selon la revendication 1, caractérisé en ce que le composant polyisocyanate exempt de solvants a) a une fonctionnalité moyenne en NCO de 2,5 à 6 et consiste en au moins un polyisocyanate à groupes biuret, uréthanne, allophanate, isocyanurate et/ou uret-dione et groupes isocyanate à liaisons (cyclo)aliphatiques ou en un mélange de tels polyisocyanates.

3. Liant mélangé selon les revendications 1 et 2, caractérisé en ce que le composant polyacrylate exempt de solvants b) a une teneur en groupes hydroxy supérieure à 11,0 % en poids et allant jusqu'à 17,5 % en poids et une viscosité de 1 000 à 10 000 mPa.s à 23°C.

4. Liant mélangé selon les revendications 1 à 3, caractérisé en ce que le composant b) consiste en au moins une résine de polyacrylate qui a été préparée par polymérisation radicalaire de
b1) 100 parties en poids d'un mélange de monomères à insaturation oléfinique consistant pour au moins 5 % en poids en monomères à groupes hydroxy alcooliques,
en présence de
b2) 20 à 200 parties en poids d'un composant alcool consistant en au moins un alcool polyvalent de poids moléculaire 62 à 1 000,
éventuellement avec l'utilisation conjointe de
b3) 0 à 100 parties en poids de composés cycliques qui, en présence de composés à groupes hydroxy alcooliques sont capables de réagir en tant qu'inducteurs d'une polymérisation avec ouverture du cycle.

5. Liant mélangé selon la revendication 4, caractérisé en ce que le composant alcool b2) est un diol ou un mélange de diols liquide à température ambiante et ayant un point d'ébullition supérieur à la température de polymérisation.

6. Liant mélangé selon les revendications 4 et 5, caractérisé en ce que le composant alcool b2) consiste pour au moins 65 % en poids en 2-éthyl-1,3-hexanediol.

7. Utilisation des liants mélangés selon les revendications 1 à 6, dans des produits de revêtement et matières à mouler de polyuréthannes à deux composants sans solvants.
